# FASCICULE DE BREVET EUROPEEN

(11) **EP 0 791 756 B1**
(45) Date de publication et mention de la délivrance du brevet: **17.04.2002**
(21) Numéro de dépôt: 97400141.4
(22) Date de dépôt: 22.01.1997
(51) Int. Cl.: F16B 13/06

(54) **Cheville d'ancrage pour matériaux plein et creux**
Ankerdübel für Voll- und Hohlmaterialien
Dowell anchor for solid and hollow materials

(30) Priorité: 21.02.1996 FR 9602128
(43) Date de publication de la demande: 27.08.1997
(73) Titulaire: SOCIETE DE PROSPECTION ET D'INVENTIONS TECHNIQUES SPIT, 26501 Bourg-Les-Valence Cédex (FR)
(72) Inventeur: Pourtier, Fabrice, 26800 Portes Les Valence (FR); Barthomeuf, Jean-Paul, 26300 Bourg de Peage (FR)
(74) Mandataire: Bloch, Gérard

(56) Documents cités:
- EP-A- 0 543 723
- DE-A- 2 460 431
- GB-A- 1 475 839

## Description

La présente invention concerne une cheville d'ancrage selon le préambule de la revendication 1 comme connue par EP-A-543723.

De façon à éviter une extraction intempestive de la cheville introduite dans le trou, des moyens d'ancrage de la cheville dans le matériau peuvent être prévus. Deux types de chevilles d'ancrage existent respectivement destinés à une utilisation dans un matériau plein, et à une utilisation dans un matériau creux, c'est-à-dire contre une paroi pleine, par exemple d'une brique.

Généralement, une cheville d'ancrage comprend une douille cylindrique et une tête d'arrêt, par exemple une collerette, prévue à une extrémité de la douille afin d'empêcher la cheville de se perdre dans le trou, la douille ménageant éventuellement au moins une fente d'ancrage, découpée longitudinalement afin d'obtenir au moins une jambe d'ancrage formant la partie crurale de la douille.

En particulier, les douilles d'ancrage pour matériau plein sont en outre pourvues d'une ou plusieurs zones d'expansion, sous forme d'évidements, tronconiques par exemple, à l'intérieur de la douille et d'au moins un noyau de forme complémentaire de celle de l'évidement.

Un modèle de ce type de cheville, pour matériau plein, comporte une pluralité de zones d'expansion tronconiques successives axialement, coopérant avec autant de noyaux tronconiques afin de former encore autant de renflements de douille destinés à la contraindre contre la paroi du trou et l'ancrer dans le matériau plein.

Un autre modèle de ce même type de cheville propose plusieurs zones d'expansion situées à l'extrémité libre de la partie crurale de la douille et un noyau unique. Par déplacement vers l'extérieur, comme précédemment, le noyau ouvre sensiblement les fentes d'ancrage de la cheville, ce qui ancre les jambes d'ancrage dans le matériau plein.

Enfin, un dernier modèle de cheville pour matériau plein est pourvu de deux zones d'expansion coniques situées l'une près de la tête d'arrêt de la cheville, l'autre à l'extrémité libre de la partie crurale de la douille et de deux cônes d'expansion.

Afin d'ancrer la cheville, un premier cône est enfoncé dans la zone d'expansion située près de la tête d'arrêt et renfle la douille à cet endroit, l'autre noyau s'étendant dans la zone d'expansion d'extrémité libre de la partie crurale pour écarter sensiblement les jambes d'ancrage, par une légère ouverture des fentes d'ancrage.

Une cheville d'ancrage pour matériau creux comprend également une partie crurale mais dont les jambes peuvent s'écarter largement de l'axe de la douille, dans une position de grande ouverture, de façon à coincer la paroi pleine du matériau creux entre la tête d'arrêt et les jambes grandes ouvertes de la cheville.

La présente invention propose une cheville améliorée.

A cet effet, l'invention concerne une cheville d'ancrage du type connue avec les caractéristiques de la deuxième partie de la revendication 1.

Dans une forme de réalisation préférée de l'invention, les zones d'expansion comprennent des gorges périphériques externes situées dans un plan orthogonal à l'axe de la douille.

De préférence encore, la gorge de la zone d'expansion pour matériau creux s'étend dans la partie non fendue de la douille.

Grâce à cela, la douille peut facilement se plier sans se déchirer lors des ouvertures petites ou grandes des fentes, selon que le matériau est plein ou creux.

Avantageusement, lesdites gorges sont larges et à fond plat.

En outre, on peut prévoir une épaisseur de douille dans le plan de gorge de la zone d'expansion pour matériau creux supérieure à celle dans le plan de gorge de la zone d'expansion pour matériau plein, les fentes d'ancrage, dans la zone d'expansion pour matériaux creux, étant destinées à s'ouvrir davantage l'une de l'autre.

L'invention sera mieux comprise à l'aide de la description suivante d'une forme de réalisation préférée de la cheville d'ancrage de l'invention, en référence au dessin annexé dans lequel :
- la figure 1 représente une vue en perspective de la cheville;
- la figure 2 représente une vue en coupe axiale de la cheville de la figure 1;
- la figure 3 représente une vue de côté de la cheville de la figure 1 ancrée dans un matériau plein et
- la figure 4 représente une vue de côté de la cheville d'ancrage de la figure 1 ancrée dans un matériau creux.

Le corps de la cheville comprend une douille 1 cylindrique, de diamètre externe D, comportant une partie crurale découpée longitudinalement par des fentes d'ancrage 2, ici quatre, formant quatre jambes d'ancrage 3 identiques, et une partie adjacente non fendue de jonction de ces jambes.

L'extrémité libre de la partie de douille non fendue supporte une collerette d'arrêt 4, destinée à empêcher que la cheville ne se perde dans un trou, percé en particulier dans un matériau creux.

L'extrémité libre de la partie crurale de la douille 1 est raccordée au sommet d'un cône d'expansion 5 tronqué. Celui-ci, taraudé intérieurement, est maintenu par friction dans la douille, et destiné à glisser par vissage entre les jambes d'ancrage 3, afin d'écarter celles-ci par une légère ouverture des fentes d'ancrage 2 pour ancrage de la cheville dans un matériau plein, ou par une grande ouverture des fentes d'ancrage 2 pour ancrage de la cheville dans un matériau creux. Les diamètres du sommet et de la base du cône 5 sont respectivement sensiblement égaux aux diamètres interne et externe (D) de la douille 1.

En outre, la paroi externe de la douille 1 comporte deux gorges 6 et 7, périphériques et à fond plat, s'étendant dans des plans orthogonaux à l'axe de la douille 1, et définissant une zone d'expansion pour matériau creux et une zone d'expansion pour matériau plein. La largeur du fond des gorges doit être suffisamment importante pour permettre un pliage aisé au niveau des gorges et sans déchirure de la douille.

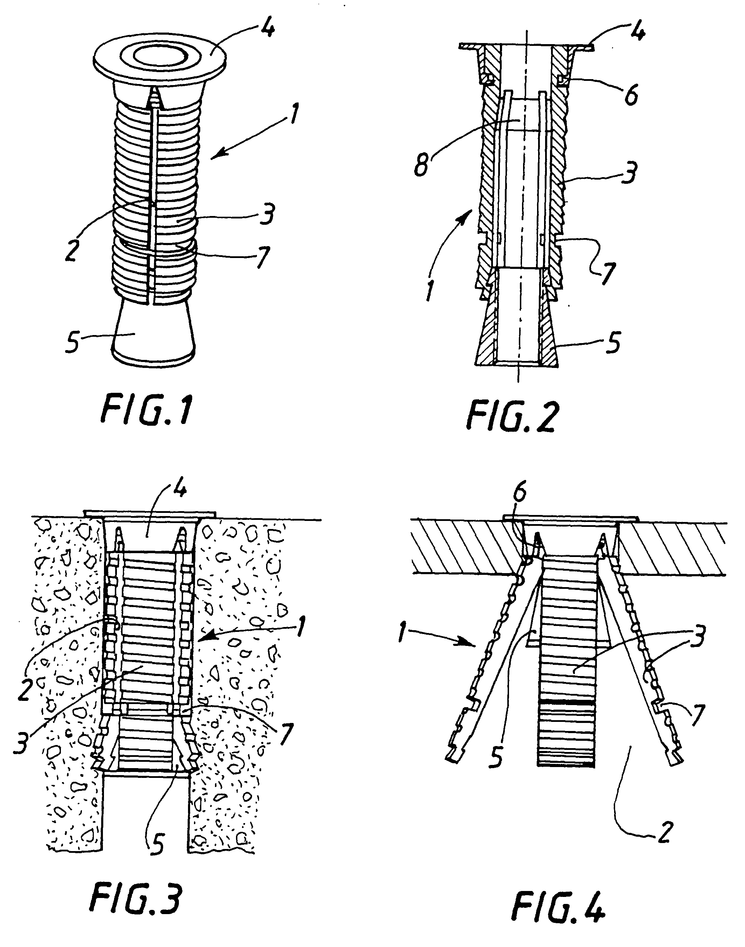

La gorge 6 de la zone d'expansion pour matériau creux s'étend dans la partie non fendue de la douille, ici à la limite entre celle-ci et la partie crurale de la douille 1. Elle est destinée à permettre une grande ouverture des fentes d'ancrage 2, comme sur la figure 4, pour un ancrage de la cheville dans un matériau creux. A cet effet, il est également prévu, à l'intérieur de la douille un logement conique 8 dont l'extrémité de plus faible ouverture est située à une distance L₁, de la gorge 6. Le logement conique 8 est destiné à accroître l'ouverture des fentes d'ancrage 2 et à arrêter le cône 5 dans sa course d'expansion pour ancrage dans un matériau creux, l'ancrage étant assuré par une coopération étendue du cône d'expansion 5 et des jambes d'ancrage 3 et non pratiquement seulement par un appui des jambes d'ancrage contre le bord intérieur du trou ménagé dans le matériau creux. La distance L₁ est ici inférieure à D/3.

La gorge 7 de la zone d'expansion pour matériau plein, décalée axialement de l'autre gorge, se situe à une distance L₂ proche de l'extrémité libre de la partie crurale de la douille 1. La distance L₂ est telle que lorsque le cône 5 atteint la fin de sa course pour ancrage dans un matériau plein, environ égale à D/3 dans du béton, son sommet doit avoir dépassé légèrement le plan dans lequel s'étend la gorge 7.

En outre, l'épaisseur de douille E₁ dans le plan de fond de gorge 6 de la zone d'expansion pour matériau creux est supérieure à celle E₂ dans le plan de gorge 7 de la zone d'expansion pour matériau plein, car le plan de gorge 6 de la zone d'expansion pour matériau creux est soumis à un effort d'expansion plus important lors des grandes ouvertures des fentes d'ancrage 2. Il est ici prévu que E₂ = 0,75.E₁.

Après avoir introduit la cheville d'ancrage universelle dans un trou percé d'un matériau indifféremment plein ou creux, on fait entrer à fond une vis dans la cheville jusqu'à bloquer la vis en translation, après pénétration dans le cône d'expansion 5 taraudé. Puis on continue de tourner la vis, dans le même sens que précédemment, afin de translater vers l'extérieur le cône d'expansion 5.

Si le matériau est plein, en béton par exemple, la course d'expansion du cône 5 est courte, l'avant du cône dépassant légèrement, en fin de course, le niveau de la gorge 7 de la zone d'expansion pour matériau plein. Ainsi, le cône d'expansion 5 ouvre légèrement les fentes d'ancrage 2 qui s'ancrent dans le béton, le plan de fond de gorge 7 se pliant sous l'effort d'expansion.

Si le matériau est creux, en briques par exemple, la course d'expansion du cône 5 est longue, l'avant du cône venant s'arrêter en butée dans le logement conique 8. Dans sa course, le cône d'expansion 5 ouvre largement les fentes d'ancrage 3, le plan de fond de gorge 6 se pliant dans ce cas davantage sous l'effort d'expansion. La cheville d'ancrage universelle est alors ancrée, la paroi pleine de la brique étant coincée entre la collerette d'arrêt 4 et les jambes d'ancrage 3 grandes ouvertes.

## Revendications

1. Cheville d'ancrage comprenant une douille (1) cylindrique comportant une partie crurale ménageant au moins une fente d'ancrage (2) longitudinale et une partie adjacente non fendue, une collerette d'arrêt (4) prévue à l'extrémité libre de la partie non fendue, et deux zones d'expansion, décalées le long de la douille et coopérant lors de l'ancrage avec un noyau d'expansion (5) et pour ouvrir la fente d'ancrage (2) de la douille (1) par une grande ouverture de la fente d'ancrage (2) dans un matériau creux, et par une plus faible ouverture de cette fente (2) dans un matériau plein, **caractérisée par le fait que** la zone d'expansion pour matériau creux est constituée par un logement tronconique intérieur.

2. Cheville d'ancrage selon la revendication 1, dans laquelle les zones d'expansion comprennent des gorges (6, 7) périphériques externes situées dans un plan orthogonal à l'axe de la douille (1).

3. Cheville d'ancrage selon la revendication 2, dans laquelle la gorge (6) de la zone d'expansion pour matériau creux s'étend dans la partie non fendue de la douille (1).

4. Cheville d'ancrage selon l'une des revendications 2 et 3, dans laquelle lesdites gorges (6, 7) sont larges et à fond plat.

5. Cheville d'ancrage selon l'une des revendications 2 à 4, dans laquelle il est prévu une épaisseur (E₁) de douille (1) dans le plan de gorge (6) de la zone d'expansion pour matériau creux supérieure à celle (E₂) du plan de gorge (7) de la zone d'expansion pour matériau plein.

## Claims

1. Expansion bolt comprising a cylindrical sleeve (1) including a crural part forming at least one longitudinal anchoring slot (2) and an adjacent non-slotted part, a stop collar (4) provided at the free end of the non-slotted part and two expansion zones, offset along the sleeve, and cooperating during anchoring with an expansion core (5) to open the anchoring slot (2) of the sleeve (1), by means of a wide opening of the anchoring slot (2) in a hollow material and a lesser opening of this slot (2) in a solid material, **characterized in that** the expansion zone for hollow material is constituted by an interior frusto conical recess (8).

2. Expansion bolt according to claim 1, in which the expansion zones comprise outer peripheral grooves (6, 7) situated in a plane orthogonal to the axis of the sleeve (1).

3. Expansion bolt according to claim 2, in which the groove (6) of the expansion zone for hollow material extends within the non-slotted part of the sleeve (1).

4. Expansion bolt according to one of claims 2 and 3, in which the said grooves (6, 7) are wide and flat-bottomed.

5. Expansion bolt according to one of claims 2 to 4, in which the thickness (E₁) of the sleeve (1) in the plane of the groove (6) of the expansion zone for hollow material is greater than that (E2) of the plane of the groove (7) of the expansion zone for solid material.

## Patentansprüche

1. Ankerdübel mit einer einen Schenkelteil aufweisenden zylindrischen Hülse (1), bei dem mindestens ein Ankerschlitz (2) in Längsrichtung und ein gegenüberliegender nicht aufgeschlitzter Teil, ein am freien Ende des nicht aufgeschlitzten Teils vorgesehener Haltering (4) und zwei entlang der Hülse versetzte, mit einem Dehnungskern (5) bei der Verankerung zusammenwirkende zum Öffnen des Ankerschlitzes (2) der Hülse (1) durch eine große Öffnung des Ankerschlitzes (2) in einem Hohlmaterial und durch eine schwächere Öffnung dieses Schlitzes (2) in einem Vollmaterial dienende Dehnungszonen angebracht sind, **dadurch gekennzeichnet, daß** die Dehnungszone für Hohlmaterial aus einem kegelstumpfartigen inneren Lager besteht.

2. Ankerdübel nach Anspruch 1, bei dem die Dehnungzonen äußere in einer rechtwinklig zur Achse der Hülse (1) gelegene Umfangskehlen (6, 7) aufweisen.

3. Ankerdübel nach Anspruch 2, bei dem die Kehle (6) der Dehnungszone für Hohlmaterial sich im nicht aufgeschlitzten Teil der Hülse (1) erstreckt.

4. Ankerdübel nach einem der Ansprüche 2 und 3, bei dem die besagten Kehlen (6, 7) breit sind und einen ebenen Boden haben.

5. Ankerdübel nach einem der Ansprüche 2 bis 4, bei dem in der Ebene der Kehle (6) der Dehnungszone für Hohlmaterial eine größere Dicke (E₁) der Hülse (1) als die Dicke (E₂) in der Ebene der Kehle (7) der Dehnungszone für Vollmaterial vorgesehen ist.
